# EUROPÄISCHE PATENTSCHRIFT

(11) **EP 0 858 864 B1**
(45) Veröffentlichungstag und Bekanntmachung des Hinweises auf die Patenterteilung: **28.08.2002**
(21) Anmeldenummer: 98102506.7
(22) Anmeldetag: 13.02.1998
(51) Int. Cl.: B23Q 7/14, B23Q 16/02

(54) **Befestigung eines Einzugsnippels an einer Trägerplatte für ein Schnellspannsystem**
Fixation of the connecting pin of a quick-connect system to a workpiece holding pallet
Fixation de la broche d'un système de fixation rapide d'une pallete porte-pièces

(30) Priorität: 14.02.1997 DE 19705690
(43) Veröffentlichungstag der Anmeldung: 19.08.1998
(73) Patentinhaber: Stark Spannsysteme GmbH, 6840 Götzis (AT)
(72) Erfinder: Stark Spannsysteme GmbH, 6840 Götzis (AT)
(74) Vertreter: Bischof, Hans-Jochen, Dipl.-Ing.

(56) Entgegenhaltungen:
- DE-A- 4 135 418
- DE-A- 4 341 743
- FR-A- 2 613 970

## Beschreibung

Gegenstand der Erfindung ist eine Vorrichtung zur Befestigung an einer Trägerplatte für ein Schnellspannsystem in dem die Trägerplatte eine Aufnahme aufweist, in der die Vorrichtung mittels eines Einzugnippels und Klemmteil verankert wird.

Schnellspannsysteme dienen zur Befestigung von Werkstücken auf Trägerplatte, wie in der DE 4135418 näher beschrieben. Der Einzugsnippel muß in der Trägerplatte exakt befestigt werden, wobei bestimmte Flächen des Einzugsnippels und bestimmte Referenzflächen in der Bohrung der Trägerplatte als Nullpunkt für die Ausgangsbasis der Bearbeitung dienen.

Es ist aus der DE 4341742, die dem nächstkommenden Stand der Technik gemäss dem Oberbegriff des Anspruchs 1 entspricht, bekannt , eine Aufspannplatte für eine Spannvorrichtung mit Einzugsnippel zu versehen, die positioniert zur Befestigung von Werkstücken dienen. Die Einzugsnippel sind zweigeteilt, wobei ein Bundzapfen vorgesehen ist, der in einer abgesetzten Bohrung der Aufspannplatte angeordnet ist und der mit einem von unten in die Bohrung eingefügten Einzugsnippel mittels einer Gewindestange verbunden ist.

Der Erfindung liegt die Aufgabe zugrunde, die Montage einer Vorrichtung in einer zugeordneten Trägerplatte so weiterzubilden, dass auf möglichst geringer Einbautiefe die Vorrichtung hochgenau und spielfrei in dieser Bohrung der Trägerplatte befestigt werden kann, ohne dass Durchgangsbohrungen notwendig sind.

Zur Lösung der gestellten Aufgabe dient die Vorrichtung des Anspruchs 1.

In einer ersten bevorzugten Ausführungsform besteht das Montageteil im wesentlichen aus einer Federscheibe, die entgegen der Zugrichtung auf den Einzugsnippel (der Einzugsnippel wird von der Trägerplatte in Richtung seiner Längserstreckung gezogen) sich in der Sackbohrung der Trägerplatte verklemmt und verspannt, wobei als Verbindungsteil zwischen dem Montageteil und dem Einzugsnippel eine Gewindeschraube vorgesehen ist, die einerseits mit dem Montageteil und andererseits mit dem Einzugsnippel verbindbar ist.

In einer weiteren Ausführungsform der Erfindung besteht das Montageteil aus einem Klemmteil, welches radial in der Sackbohrung der Trägeplatte dadurch aufspreizbar ist, dass eine einseitig offene Ringnut vorhanden ist, in welche ein konischer Kolbenring eingeschlagen werden kann, der demzufolge den ausserhalb der Ringnut befindlichen Bereich (Ringansatz) dieses Klemmteils in klemmschlüssige Anlage am Innenumfang der Sackbohrung bringt.

In einer dritten Ausführungsform ist es vorgesehen, dass das Klemmteil konische Anlageflächen für einen Federring aufweist, welcher Federring in einer am Innenumfang der Sackbohrung angebrachten Ringnut lagengesichert eingesetzt ist, wobei dann die Konusflächen des Klemmteils an dem zugeordneten Federring entlanggleiten und das Klemmteil sich damit in der Sackbohrung der Trägerplatte verkeilt.

Allen Ausführungsformen ist gemeinsam, dass die Vorrichtung aus einem Einzugsnippel und einem Klemmteil besteht.

Weitere Einzelheiten ergeben sich aus den Unteransprüchen.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch eine erste Ausführungsform der Befestigung eines Einzugsnippels in einer Sackbohrung einer Trägerplatte,
- Figur 2:: zweite Ausführungsform,
- Figur 3:: dritte Ausführungsform,
- Figur 4:: vierte Ausführungsform,
- Figur 5:: fünfte Ausführungsform,
- Figur 6:: sechste Ausführungsform,
- Figur 7:: siebte Ausführungsform,
- Figur 8:: achte Ausführungsform,
- Figur 9:: neunte Ausführungsform,
- Figur 10:: zehnte Ausführungsform.

In einer Trägerplatte 1 ist eine Sackbohrung 2 eingebracht, wobei die Trägerplatte 1 nicht notwendigerweise ein plattenförmiges Teil sein kann, sondern sie kann selbst als Maschinenteil ausgebildet werden.
Kennzeichnend für diese Art ist, dass sowohl die Trägerplatte als auch das Maschinenteil mit Hilfe von Einzugsnippeln in einem Schnellspannsystem gespannt werden kann, wobei das Schnellspannsystem ortsfest an einer Bearbeitungsmaschine angeordnet ist. Sinn der nachstehend beschriebenen Massnahmen ist also eine neuartige Befestigung von Einzugsnippeln in einer Trägerplatte oder in einem Maschinenteil zu schildern.

Im ersten Ausführungsbeispiel besteht der Einzugsnippel 3 im wesentlichen aus einem Kopf 5, welcher in eine nicht näher dargestellte Spannausnehmung eines Schnellspannsystems eingreift, wobei sich an den Kopf eine Ringnut 4 verringerten Durchmessers anschliesst, in welche nicht näher dargestellte Kugeln des Schnellspannsystems eingreifen, welche sich formschlüssig in die Ringnut 4 einlegen und den Einzugsnippel 3 in Pfeilrichtung 6 nach unten mit einer Zugkraft beaufschlagen.

Der Einzugsnippel 3 ist werkstoffeinstückig mit einem Ringflansch 7 verbunden, wobei der Ringflansch eine umlaufende Passfläche 8 aufweist, welche Passfläche in die zugeordnete Spannausnehmung des Schnellspannsystems eingreift und dort spielfrei gehalten ist.

Ferner weist der Einzugsnippel 3 einen inneren Ansatz 9 auf, der mit seiner Passfläche 10 (Referenzfläche oder Nullpunktsfläche) praktisch spielfrei in den Innenumfang der Sackbohrung 2 eingreift und dort gelagert ist.

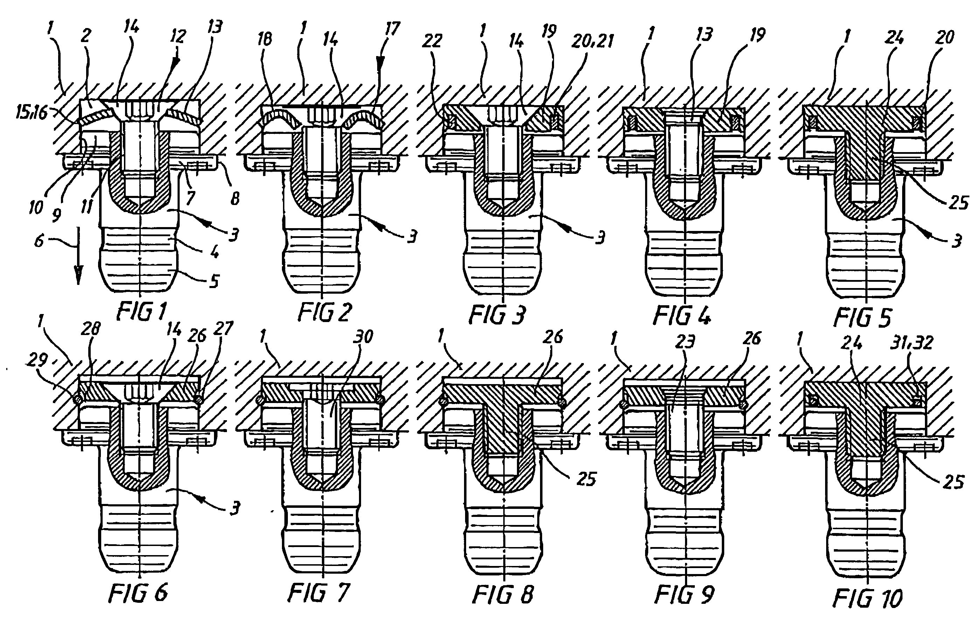

Zur Befestigung des Einzugsnippels 3 in diese Sackbohrung ist ein Montageteil vorhanden, welches im Ausführungsbeispiel nach Figur 1 im wesentlichen aus einer konkav gekrümmten Federscheibe 13 besteht, welche eine zentrale Mittenbohrung aufweist, durch welche der Kopf 14 einer Schraube 12 hindurchgreift. Das bolzenseitige Ende dieser Schraube 12 greift in eine zugeordnete Gewindebohrung 11 im Bereich des Einzugsnippels 3 hinein.

Zur Montage wird also zunächst die Federscheibe 13 in Gegenrichtung zur Pfeilrichtung 6 in die Sackbohrung 2 hineingetrieben, wobei ein entsprechendes stempelförmiges Zylinderwerkzeug verwendet wird, um die Federscheibe möglichst gerade und passend in die Sackbohrung 2 hineinzutreiben. Hierbei legt sich dann der Kopf 14 der Schraube 12 in der Sackbohrung fest.

Nach dieser Festlegung wird der Einzugsnippel 3 mit seiner Gewindebohrung 11 auf das bolzenseitige Ende der Schraube 12 aufgeschraubt, wodurch eine Zugkraft auf die Schraube 12 in Pfeilrichtung 6 ausgeübt wird und eine unerwünschte Verdrehung der Schraube in Bezug zur Federscheibe dadurch vermieden wird, dass sich der konische Teil des Kopfes 14 der Schraube 12 in der zugeordneten Mittenausnehmung der Federscheibe 13 verkeilt.

Mit zunehmendem Aufschrauben des Einzugsnippels 3 auf die Schraube 12 kommt es daher zu einer Verspannung der Federscheibe 13 am Innenumfang der Sackbohrung 2, wobei die möglichst scharfkantig ausgebildeten Kanten 15 der Federscheibe 13 sich zugeordnete Einkerbungen 16 am Innenumfang der Sackbohrung 2 schaffen und sich dort verkeilen.

Die Federscheibe 13 biegt sich hierbei entgegen ihrer gewölbten Richtung durch, so dass ein kraft- und formschlüssiger Eingriff der Kanten 15 in den Einkerbungen 16 stattfindet. Auf diese Weise ist der Einzugsnippel 3 hochbelastbar in der Sackbohrung 2 verankert.

Für alle anderen Ausführungsbeispiele nach den Figuren 2 bis 10 gelten im übrigen zunächst die gleichen Erläuterungen für die gleichen Teile, wie sie anhand der Figur 1 erläutert wurden.

Das Ausführungsbeispiel nach Figur 2 unterscheidet sich nur hinsichtlich der Formgebung der Federscheibe 17 von der Federscheibe 13 nach Figur 1. Dort weist die Federscheibe 17 einen etwa mittigen Ringwulst 18 auf, was bedeutet, dass der Kopf 14 der Schraube 12 weniger beansprucht wird als vergleichsweise durch die Federscheibe 13 nach Figur 1.

In den Figuren 3 bis 5 wird ein Klemmteil 19 beschrieben, welches nahe seinem Aussenumfang eine Ringnut 20 aufweist, die einseitig offen ausgebildet ist. In diese Ringnut 20 wird ein konischer Kolbenring 21 eingeschlagen, der beispielsweise aus einem Federstahlmaterial, einem Kunststoffmaterial oder dergleichen besteht. Aufgrund dieses sich in Einschlagrichtung (in Gegenrichtung zur Pfeilrichtung 6) konisch zuspitzenden Kolbenringes 21 erfolgt hiermit eine radiale Aufweitung des aussen liegenden Ansatzes 22 dieses Klemmteils 19, wodurch sich dieser Ansatz 22 wiederum im Bereich der Sackbohrung 2 eingräbt.

Das Ausführungsbeispiel nach Figur 4 unterscheidet sich von dem der Figur 3 nur im Hinblick auf die Verwendung einer anderen Schraube, weil in Figur 4 die Schraube 23 keinen Senkkopf aufweist.

Im Ausführungsbeispiel nach Figur 5 ist dargestellt, dass eine Schraube vollständig entfallen kann und dass statt dessen das Klemmteil 24 einen Gewindeansatz 25 aufweisen kann, welcher mit seinem Aussengewinde in die zugeordnete Innengewindebohrung des Einzugsnippels 3 hineingreift.

In den Figuren 6 bis 9 wird jeweils ein Klemmteil 26 verwendet, welches im wesentlichen am Aussenumfang liegende und konisch sich nach innen verjüngende Konusflächen 28 aufweist, die mit einem zugeordneten Federring 27 zusammenwirken. Der Federring 27 ist hierbei in einer Ringnut 29 am Innenumfang der Sackbohrung 2 gelagert.

Mit zunehmender Zugkraft auf die Schraube 12 in Pfeilrichtung 6 beim Einschrauben des Einzugsnippels 3 wird somit die Konusfläche 28 sich mit dem Federring 27 verkeilen, und damit ist das Montageteil in der Sackbohrung 2 festgelegt.

Die Figur 7 unterscheidet sich von der Figur 6 nur durch die Verwendung einer Zylinderschraube 30 im Vergleich zu einer Senkkopfschraube 12 nach Figur 6.

Die Figur 8 zeigt, dass das Klemmteil 26 direkt auch den vorher erwähnten Gewindeansatz 25 aufweisen kann, so dass eine Schraube entfällt.

Die Figur 9 zeigt, dass das Klemmteil 26 auch mit einer zylindrischen Schraube 23 zusammenwirken kann, so wie es anhand der Figur 4 erläutert wurde.

Die Figur 10 zeigt schließlich, dass anstatt eines konisch ausgebildeten Kolbenrings 21 auch ein rundprofilierter Federring 31 verwendet werden kann, der in eine zugeordnete Ringnut 32 eingeschlagen werden kann, wobei die Weite der Ringnut etwas geringer ist als die Materialdicke des Federrings 31, so dass diese Ringnut 32 wiederum radial aufgespreizt wird und der vorher anhand der Figur 3 erwähnte Ansatz 22 sich wiederum in das Material am Innenumfang der Sackbohrung 2 eingräbt und sich dort verkeilt.

In diesem Ausführungsbeispiel wird es bevorzugt, wenn die Deckfläche des Klemmteils 24 am Grund der Sackbohrung 2 anliegt.

Bei der Schraube 23 handelt es sich um eine selbsthemmende Schraube, die in der zugeordneten Konusausnehmung des Klemmteils 19,26 verdrehungsgesichert sitzt, während es sich bei der Schraube 12 um eine Senkkopfschraube handelt, die aufgrund der konischen Ausbildung des Kopfes 14 ebenfalls verdrehungsgesichert im Klemmteil gehalten ist.

Allen Ausführungsformen ist also gemeinsam, dass der Einzugsnippel 3 spielfrei mit hoher Präzision und mit hoher Zugkraft belastbar in der Sackbohrung 2 der Trägerplatte 1 gehalten ist.

Es ist von Vorteil, dass auch die Tiefe der Sackbohrung sehr gering gehalten werden kann.

### Zeichnungs-Legende

- 1: Trägerplatte
- 2: Sackbohrung
- 3: Einzugsnippel
- 4: Ringnut
- 5: Kopf
- 6: Pfeilrichtung
- 7: Ringflansch
- 8: Passfläche
- 9: Ansatz
- 10: Passfläche (Referenzfläche)
- 11: Gewindebohrung
- 12: Schraube
- 13: Federscheibe
- 14: Kopf von Schraube 12
- 15: Kante
- 16: Einkerbung
- 17: Federscheibe
- 18: Ringwulst
- 19: Klemmteil
- 20: Ringnut
- 21: Kolbenring (konisch)
- 22: Ansatz
- 23: Schraube
- 24: Klemmteil
- 25: Gewindeansatz
- 26: Klemmteil
- 27: Federring
- 28: Konusfläche
- 29: Ringnut
- 30: Zylinderschraube
- 31: Federring
- 32: Ringnut

## Patentansprüche

1. Vorrichtung zur Befestigung an seiner Trägerplatte für ein Schnellspannsystem, insbesondere für die spanabhebende Bearbeitung von Werkstücken, wobei die Trägerplatte eine entsprechende Aufnahme aufweist, in der die Vorrichtung verankert wird, bestehend aus einem Einzugsnippel und einem Klemmteil, ***dadurch gekennzeichnet,* dass** das Klemmteil eine Federscheibe, ein verformbarer Kolbenring oder ein Kolbenring mit einem Federring ist.

2. Vorrichtung nach Anspruch 1, ***dadurch gekennzeichnet,* dass** das Klemmteil (13;18;19;24) als radial aufspreizbares Klemmteil ausgebildet ist.

3. Vorrichtung nach Anspruch 1, ***dadurch gekennzeichnet,* dass** das Klemmteil (26) mit Konusflächen (28) zur Anlage an einem Bauteil (27) in der Aufnahme (2) versehen ist.

## Claims

1. Device for fastening a supporting plate for a quick-action clamping system, specifically for the metal-cutting machining of work pieces, with said supporting plate being provided with an appropriate receiving element in which the device is anchored, consisting of a feed fitting and a clamping element, ***characterised in* that** said clamping element is a flat spring, a ductile piston ring or a piston ring with a lock washer.

2. Device according to Claim 1, ***characterised in* that** said clamping element (13; 18; 19; 24) is configured as radially spreadable clamping element.

3. Device according to Claim 1, ***characterised in* that** said clamping element (26) is provided with cone surfaces (28) for bearing against a component (27) in said receiving element (2).

## Revendications

1. Dispositif à fixer une plaque d'appui pour un système de serrage à action rapide, en particulier pour l'usinage à enlèvement des copeaux des pièces à usiner, ladite plaque d'appui étant munie d'un élément récepteur approprié, dans lequel le dispositif est ancré, qui consiste en un raccord à vis d'approche et un élément tendeur, ***caractérisé en ce* que** ledit élément tendeur est un ressort à disques, un anneau de piston déformable ou un anneau de piston à une rondelle élastique.

2. Dispositif selon la revendication, ***caractérisé en ce* que** ledit élément tendeur (13; 18; 19; 24) est configuré sous forme d'un élément tendeur apte à être écarté en sens radial.

3. Dispositif selon la revendication, ***caractérisé en ce* que** ledit élément tendeur (26) est muni de surfaces à cône (28) pour porter contre un composant (27) dans ledit élément récepteur (2).
